# EUROPEAN PATENT APPLICATION

(11) **EP 4 604 483 A1**
(43) Date of publication of application: **20.08.2025**
(21) Application number: 25158033.8
(22) Date of filing: 14.02.2025
(51) Int. Cl.: H04L 45/24, H04L 45/243, H04L 45/28, H04L 45/00, H04L 45/02

(54) **ETHERNET-TREE (E-TREE) INTEGRATED ROUTING AND BRIDGING (IRB) WITH EGRESS LINK PROTECTION**

(30) Priority: 16.02.2024 IN 202441010895; 03.02.2025 US 202519044491
(71) Applicant: Juniper Networks, Inc., Sunnyvale, CA 94089-1206 (US)
(72) Inventor: SIKAND, Vrishabha, Sunnyvale, 94089 (US); LIN, Wen, Sunnyvale, 94089 (US); GUPTA, Deepen, Sunnyvale, 94089 (US)
(74) Representative: D Young & Co LLP

(57) **Abstract**

A first leaf provider edge device may determine that a customer edge device is multihomed behind the first leaf provider edge device and a second leaf provider edge device. The first leaf provider edge device may create, based on determining that the customer edge device is multihomed, a protection path for a network address of the customer edge device and via the second leaf provider edge device. The first leaf provider edge device may prevent traffic not received from a core network from being provided to the customer edge device via the protection path.

## Description

### CROSS-REFERENCE TO RELATED APPLICATION

This Patent Application claims priority to Indian Provisional Patent Application No. 202441010895, filed on February 16, 2024, and entitled "ETHERNET-TREE (E-TREE) INTEGRATED ROUTING AND BRIDGING (IRB) WITH EGRESS LINK PROTECTION." The disclosure of the prior Application is considered part of and is incorporated by reference into this Patent Application.

### BACKGROUND

In a rooted-multipoint Ethernet service known as an Ethernet-tree (E-tree), a customer site that is typically represented by an attachment circuit (AC) is labeled as either a root or a leaf site. A customer site may also be represented by a media access control (MAC) address along with a virtual local area network (VLAN) tag.

### SUMMARY

Particular aspects are set out in the appended independent claims. Various optional embodiments are set out in the dependent claims.

Some implementations described herein relate to a method. The method may include determining, by a first leaf provider edge device, that a customer edge device is multihomed behind the first leaf provider edge device and a second leaf provider edge device. The method may include creating, based on determining that the customer edge device is multihomed, a protection path for a network address of the customer edge device and via the second leaf provider edge device. The method may include preventing traffic not received from a core network from being provided to the customer edge device via the protection path.

Some implementations described herein relate to a first leaf provider edge device. The first leaf provider edge device may include one or more memories and one or more processors. The one or more processors may be configured to determine that a customer edge device is multihomed behind the first leaf provider edge device and a second leaf provider edge device, and create, based on determining that the customer edge device is multihomed, a protection path for a network address of the customer edge device and via the second leaf provider edge device. The one or more processors may be configured to prevent traffic not received from a core network from being provided to the customer edge device via the protection path, and enable Ethernet-tree integrated routing and bridging to prevent leaf-to-leaf inter-subnet traffic.

Some implementations described herein relate to a computer-readable medium that comprises (e.g. stores and/or conveys) a set of instructions. The set of instructions, when executed by one or more processors of a first leaf provider edge device, may cause the first leaf provider edge device to determine that a customer edge device is multihomed behind the first leaf provider edge device and a second leaf provider edge device, and create, based on determining that the customer edge device is multihomed, a protection path for a network address of the customer edge device and via the second leaf provider edge device. The set of instructions, when executed by one or more processors of the first leaf provider edge device, may cause the first leaf provider edge device to prevent traffic not received from a core network from being provided to the customer edge device via the protection path, and enable Ethernet-tree integrated routing and bridging with egress link protection.

### BRIEF DESCRIPTION OF THE DRAWINGS

Figs. 1A-1D are diagrams of an example associated with providing Ethernet-tree integrated routing and bridging with egress link protection.
Fig. 2 is a diagram of an example environment in which systems and/or methods described herein may be implemented.
Figs. 3 and 4 are diagrams of example components of one or more devices of Fig. 2.
Fig. 5 is a flowchart of an example process for providing Ethernet-tree integrated routing and bridging with egress link protection.

### DETAILED DESCRIPTION

The following detailed description of example implementations refers to the accompanying drawings. The same reference numbers in different drawings may identify the same or similar elements.

An Ethernet virtual private network (EVPN) may allow a group of dispersed client sites (e.g., included in a VLAN) to be connected using a data layer. An EVPN may include one or more customer edge (CE) devices connected to one or more provider edge (PE) devices. Failover may need to be achieved on egress link failure when a destination MAC is multihomed to provider edge devices with a leaf Ethernet segment (ES). In one use case, an E-tree service may be provided with leaf and root provider edge devices in a network, and customer edge devices are multihomed to a set of leaf provider edge devices. When traffic is delivered from the root provider edge device to the customer edge devices multihomed to leaf provider edge devices, fast convergence is desired when the network suffers an egress link failure. However, current techniques fail to provide such fast convergence.

Current techniques also fail to support E-tree integrated routing and bridging (IRB) and E-tree IRB with egress link protection. Egress link protection with fast failover is limited to the E-LAN or EVPN E-tree for customer edge devices that are multihomed to root provider edge devices. When a destination MAC is located behind a multihomed leaf provider edge device, no E-tree egress link protection is defined since E-tree inherently prevents leaf-to-leaf communication. E-tree IRB can have IRB play a root role when a leaf or a root is at a provider edge. However, with leaf-to-leaf IRB, a leaf or root property is lost after routing and fails to identify whether a source of traffic has a leaf or root property after Layer 3 routing.

Thus, current techniques for providing an E-tree service consume computing resources (e.g., processing resources, memory resources, communication resources, and/or the like), networking resources, and/or the like, associated with failing to provide egress link protection when a destination device is located behind a multihomed leaf provider edge device, losing leaf and root property after routing, failing to identify whether a traffic source has a leaf or root property, and/or the like. Furthermore, the current techniques for providing an E-tree service with root behavior may lead to longer convergence time without egress link protection and may lead to leaf-to-leaf communication for inter-subnet traffic that should be prevented based on E-tree rules.

Some implementations described herein relate to a network that provides Ethernet-tree integrated routing and bridging with egress link protection. For example, a first leaf provider edge device may determine that a customer edge device is multihomed behind the first leaf provider edge device and a second leaf provider edge device. The first leaf provider edge device may create, based on determining that the customer edge device is multihomed, a protection path for a network address of the customer edge device and via the second leaf provider edge device. The first leaf provider edge device may prevent traffic not received from a core network from being provided to the customer edge device via the protection path. In some implementations, the first leaf provider edge device may enable E-tree IRB to prevent leaf-to-leaf inter-subnet traffic, and may enable E-tree IRB with egress link protection.

In this way, the network provides Ethernet-tree integrated routing and bridging with egress link protection. For example, the network may provide egress link protection for fast convergence when a destination MAC is multihomed to leaf provider edge devices, and may provide E-tree intra-subnet traffic with egress link protection, while still blocking leaf-to-leaf communications for intra-subnet traffic. The network may provide EVPN E-tree IRB for inter-subnet traffic for leaf and root provider edge devices, and may address leaf-to-leaf case while IRB assumes a root behavior. The network may also provide a combination of E-tree IRB and egress link protection support. Thus, the network conserves computing resources, networking resources, and/or the like that would otherwise have been consumed by failing to provide egress link protection when a destination device is located behind a multihomed leaf provider edge device, losing leaf and root property after routing, failing to identify whether a traffic source has a leaf or root property, and/or the like.

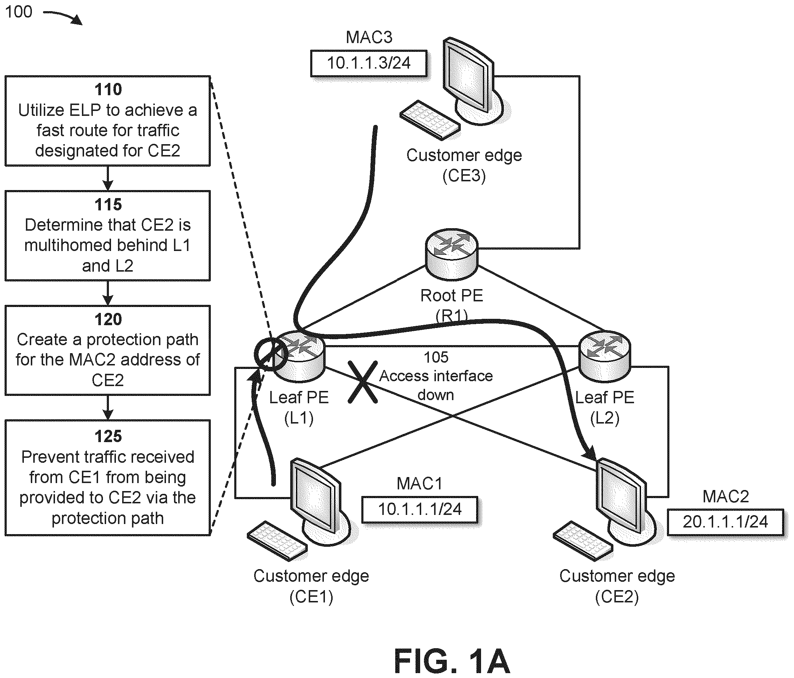

Figs. 1A-1D are diagrams of an example 100 associated with providing Ethernet-tree integrated routing and bridging with egress link protection. As shown in Figs. 1A-1D, example 100 includes a first customer edge device (CE1), a second customer edge device (CE2), a third customer edge device (CE3), a root provider edge device (R1), a first leaf provider edge device (L1), and a second leaf provider edge device (L2). The first customer edge device, the second customer edge device, the third customer edge device, the root provider edge device, the first leaf provider edge device, and the second leaf provider edge device may be interconnected as shown in Figs. 1A-1D. Further details of the first customer edge device, the second customer edge device, the third customer edge device, the root provider edge device, the first leaf provider edge device, and the second leaf provider edge device are provided elsewhere herein.

Fig. 1A depicts an example of providing egress link protection associated with intra-subnet traffic. As shown in Fig. 1A, and by reference number 105, the first leaf provider edge device (L1) may determine that an access interface between the first leaf provider edge device (L1) and the second customer edge device (CE2) is down (e.g., inoperable). For example, the first leaf provider edge device (L1) may determine that the access interface is down based on link state detection (e.g., via link layer protocols that detect the presence of a physical link), failure to receive a response to a keep-alive message within a specified period, a simple network management protocol (SNMP) indicating that the access interface is down, routing protocols indicating that the access interface is down, and/or the like.

As further shown in Fig. 1A, and by reference number 110, the first leaf provider edge device (L1) may utilize egress link protection (ELP) to achieve a fast route for traffic designated for the second customer edge device (CE2). For example, to utilize egress link protection, the first leaf provider edge device (L1) may relax the no leaf-to-leaf communication for the protection path to enable a protection path between the leaf provider edge devices sharing a same multihomed leaf Ethernet segment (ES) (e.g., the first leaf provider edge device (L1) and the second leaf provider edge device (L2)).

As further shown in Fig. 1A, and by reference number 115, to establish egress link protection for Layer 2 traffic, the first leaf provider edge device (L1) may determine that the second customer edge device (CE2) is multihomed behind the first leaf provider edge device (L1) and the second leaf provider edge device (L2). For example, each of the first leaf provider edge device (L1) and the second leaf provider edge device (L2) may utilize a link layer discovery protocol (LLDP) or other link state detection mechanisms to determine if there is an active link to the second customer edge device (CE2). The second customer edge device (CE2) may be configured with connections to the first leaf provider edge device (L1) and the second leaf provider edge device (L2). Each of the first leaf provider edge device (L1) and the second leaf provider edge device (L2) may perform link state detection and learn the MAC address (e.g., a MAC2 address of 20.1.1.1/24) of the second customer edge device (CE2). The first leaf provider edge device (L1) and the second leaf provider edge device (L2) may synchronize link state and routing information, confirming that the second customer edge device (CE2) is multihomed.

As further shown in Fig. 1A, and by reference number 120, the first leaf provider edge device (L1) may create a protection path for the MAC2 address of 20.1.1.1/24 of the second customer edge device (CE2). For example, the leaf and root provider edge devices may share the same route target(s). When the first leaf provider edge device (L1) determines that the second customer edge device (CE2) is multihomed behind the first leaf provider edge device (L1) and the second leaf provider edge device (L2), the first leaf provider edge device (L1) may create a protection path for the MAC2 address of the second customer edge device (CE2). In some implementations, the first leaf provider edge device (L1) may program the MAC2 address to point to the access interface (e.g., determined to be down) with a lower weight and to the protection path with a higher weight in the forwarding plane.

In some implementations, as shown in Fig. 1A, when the first leaf provider edge device (L1) receives, from the third customer edge device (C3), traffic destined for the second customer edge device (CE2), the first leaf provider edge device (L1) may utilize the protection path to provide the traffic to the second leaf provider edge device (L2). The second leaf provider edge device (L2) may provide the traffic to the second customer edge device (CE2).

As further shown in Fig. 1A, and by reference number 125, the first leaf provider edge device (L1) may prevent traffic received from the first customer edge device (CE1) from being provided to the second customer edge device (CE2) through the protection path. For example, only known unicast traffic (e.g., traffic received from a core network) may utilize the protection path in case of egress link failure to the second customer edge device (CE2). No local switching may be enforced on the first leaf provider edge device (L1) from leaf to leaf since the MAC2 address is installed with a leaf property. Thus, traffic received from the first customer edge device (CE1) may be prevented from being provided to the second customer edge device (CE2) through the protection path or a local link.

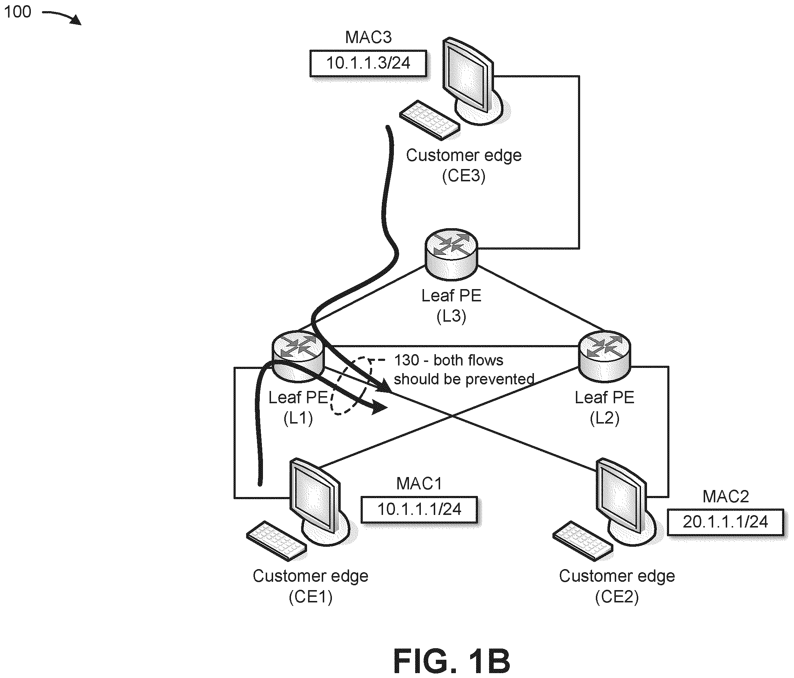

Fig. 1B depicts an example of providing inter-subnet traffic with E-tree IRB, where the root PE device (R1) is a third leaf PE device (L3). With reference to Fig. 1B, if E-tree for IRB is needed, only root or leaf per provider edge device scope may be allowed. When a provider edge device is either a leaf or a root provider edge device, E-tree IRB may be supported as follows. IRB may play a root role and perform Layer 3 routing regardless of whether a provider edge device is a leaf or a root. There is a backdoor for leaf-to-leaf inter-subnet traffic since, after Layer 3 routing, a Layer 2 root/leaf property is lost. The first leaf provider edge device (L1) may provide inter-subnet routing for a destination MAC with a root property or a destination address outside the EVPN network. This may open a back door for either a local or a remote leaf customer edge device to another leaf customer edge device inter-subnet communication.

For example, for inter-subnet traffic sent from the first customer edge device (CE1) to the second customer edge device (CE2) and after Layer 3 routing, the first leaf provider edge device (L1) may forward to the MAC2 address of the second customer edge device (CE2) based on a next hop used by the MAC2 address. Furthermore, for inter-subnet traffic sent from the third customer edge device (CE3) to the second customer edge device (CE2) and after Layer 3 routing, the first leaf provider edge device (L1) may forward to the MAC2 address of the second customer edge device (CE2) based on a next hop used by the MAC2 address. As shown in Fig. 1B, and by reference number 130, this may lead to leaf-to-leaf inter-subnet forwarding which should be prevented.

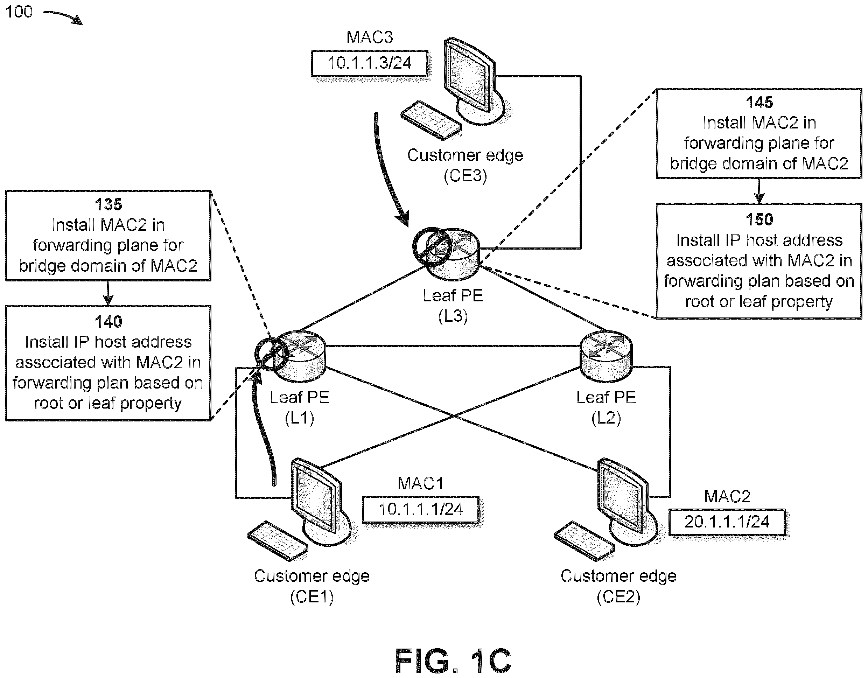

Fig. 1C further depicts an example of providing inter-subnet traffic with E-tree IRB, where the root PE device (R1) is replaced by a third leaf PE device (L3). As shown in Fig. 1C, and by reference number 135, the first leaf provider edge device (L1) may install the MAC2 address in a forwarding plane for a bridge domain to which the MAC2 address belongs. For example, to support E-tree IRB and prevent leaf-to-leaf inter-subnet traffic, the first leaf provider edge device (L1) may install the MAC2 address of the second customer edge device (CE2) in a forwarding plane for a bridge domain to which the MAC2 address belongs.

As further shown in Fig. 1C, and by reference number 140, the first leaf provider edge device (L1) may install a host Internet protocol (IP) address (e.g., an IP version 4 address or an IP version 6 address) associated with the MAC2 address in the forwarding plane based on a root property or a leaf property. For example, the first leaf provider edge device (L1) may install the host IP address associated with the MAC2 address in the forwarding plane based on a root property or a leaf property associated with an EVPN Type 2 (T2) route for a destination MAC/IP address. There may be no change to a next-hop associated with the IP host route if the MAC2 address has a root property. A next-hop may be associated with a discard next-hop when the first leaf provider edge device (L1) learns a MAC/IP binding for a MAC behind the second leaf provider edge device (L2) with a leaf property (e.g., an IP host route for the second customer edge device (CE2) may be associated with a discard next-hop). As shown in Fig. 1C, this prevents the first leaf provider edge device (L1) from forwarding traffic received from the first customer edge device (CE1) to the second customer edge device (CE2).

As further shown in Fig. 1C, and by reference number 145, the third leaf provider edge device (L3) may install the MAC2 address in a forwarding plane for a bridge domain to which the MAC2 address belongs. For example, if the third leaf provider edge device (L3) as a remote leaf provider edge device learns a MAC to IP binding for the second customer edge device (CE2), the third leaf provider edge device (L3) may perform the same functions as the first leaf provider edge device (L1) due to the leaf property of the MAC2 address. To support E-tree IRB and prevent leaf-to-leaf inter-subnet traffic, the third leaf provider edge device (L3) may install the MAC2 address of the second customer edge device (CE2) in a forwarding plane for a bridge domain to which the MAC2 address belongs.

As further shown in Fig. 1C, and by reference number 150, the third leaf provider edge device (L3) may install the host IP address associated with the MAC2 address in the forwarding plane based on the root property or the leaf property. For example, the third leaf provider edge device (L3) may install the host IP address associated with the MAC2 address in the forwarding plane based on a root property or a leaf property associated with the T2 route for a destination MAC/IP address. There may be no change to a next-hop associated with the IP host route if the MAC2 address has a root property. A next-hop may be associated with a discard next-hop when the third leaf provider edge device (L3) learns a MAC/IP binding for a MAC behind the second leaf provider edge device (L2) with a leaf property (e.g., an IP host route for the second customer edge device (CE2) may be associated with a discard next-hop). As shown in Fig. 1C, this prevents the third leaf provider edge device (L3) from forwarding traffic received from the third customer edge device (CE3) to the second customer edge device (CE2).

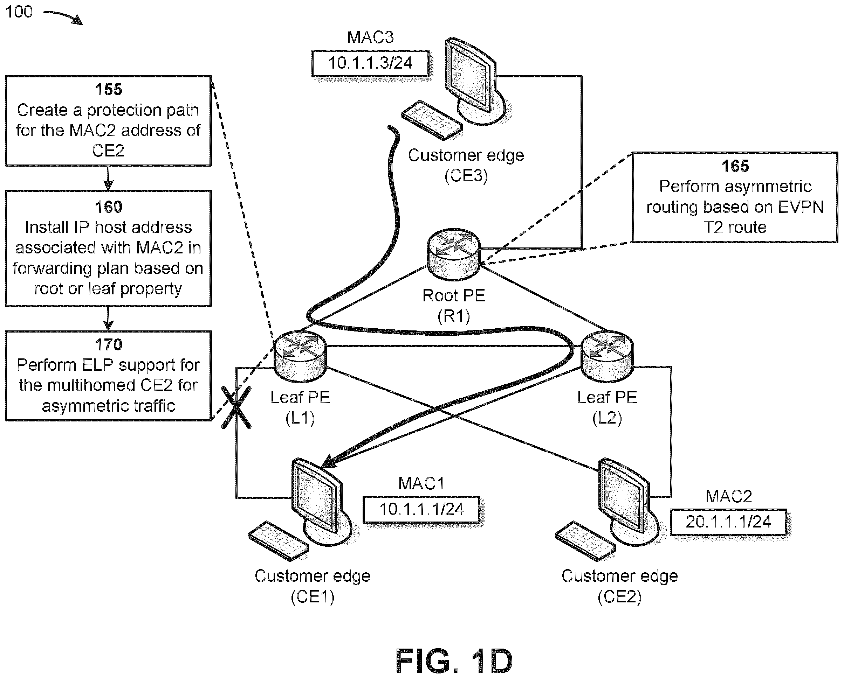

Fig. 1D depicts an example of providing egress link protection with E-tree IRB for a customer edge device multihomed to leaf provider edge devices. As shown in Fig. 1D, and by reference number 155, the first leaf provider edge device (L1) may create a protection path for the MAC2 address. For example, when the first leaf provider edge device (L1) determines that the second customer edge device (CE2) is multihomed behind the first leaf provider edge device (L1) and the second leaf provider edge device (L2), the first leaf provider edge device (L1) may create a protection path for the MAC2 address of the second customer edge device (CE2). In some implementations, the first leaf provider edge device (L1) may program the MAC2 address to point to the access interface (e.g., determined to be down) with a lower weight and to the protection path with a higher weight in the forwarding.

As further shown in Fig. 1D, and by reference number 160, the first leaf provider edge device (L1) may install a host IP address associated with the MAC2 address in the forwarding plane based on a root property or a leaf property. For example, to prevent leaf-to-leaf backdoor inter-subnet traffic, the first leaf provider edge device (L1) may install the host IP address associated with the MAC2 address in the forwarding plane based on a root property or a leaf property associated with an EVPN T2 route for a destination MAC/IP address. There may be no change to a next-hop associated with the IP host route if the MAC2 address has a root property. A next-hop may be associated with a discard next-hop when the first leaf provider edge device (L1) learns a MAC/IP binding for a MAC behind the second leaf provider edge device (L2) with a leaf property (e.g., an IP host route for the second customer edge device (CE2) may be associated with a discard next-hop).

As further shown in Fig. 1D, and by reference number 165, the root provider edge device (R1) may perform asymmetric routing based on an EVPN T2 route. For example, to provide the root provider edge device (R1) with IRB egress link protection support, the root provider edge device (R1) may perform asymmetric routing based on an EVPN T2 route, such that no Layer 3 routing is required on the first leaf provider edge device (L1) for inter-subnet traffic.

As further shown in Fig. 1D, and by reference number 170, the first leaf provider edge device (L1) may perform egress link protection for the multihomed second customer edge device (CE2) for asymmetric inter-subnet traffic from another ingress provider edge device. For example, when the asymmetric traffic reaches the first leaf provider edge device (L1) through the bridge domain, the first leaf provider edge device (L1) may perform egress link protection support for the multihomed second customer edge device (CE2) in the bridge domain to which the second customer edge device (CE2) belongs. The first leaf provider edge device (L1) may use asymmetric routing for the EVPN network (e.g., no Type-5 advertisement for host addresses belonging to the EVPN network, and no EVPN Type-2 symmetric route advertisement). Thus, as shown in Fig. 1D, when the first leaf provider edge device (L1) receives, from the third customer edge device (CE3), traffic destined for the first customer edge device (CE1), the first leaf provider edge device (L1) may provide the traffic to the second leaf provider edge device (L2) via the protection path. The second leaf provider edge device (L2) may provide the traffic to the first customer edge device (CE1).

In this way, the network provides Ethernet-tree integrated routing and bridging with egress link protection. For example, the network may provide egress link protection for fast convergence when a destination MAC is multihomed to leaf provider edge devices, and may provide E-tree intra-subnet traffic with egress link protection, while still blocking leaf-to-leaf communications for intra-subnet traffic. The network may provide EVPN E-tree IRB for inter-subnet traffic for leaf and root provider edge devices, and may address leaf-to-leaf case while IRB assumes a root behavior. The network may also provide a combination of E-tree IRB and egress link protection support. Thus, the network conserves computing resources, networking resources, and/or the like that would otherwise have been consumed by failing to provide egress link protection when a destination device is located behind a multihomed leaf provider edge device, losing leaf and root property after routing, failing to identify whether a traffic source has a leaf or root property, and/or the like.

As indicated above, Figs. 1A-1D are provided as an example. Other examples may differ from what is described with regard to Figs. 1A-1D. The number and arrangement of devices shown in Figs. 1A-1D are provided as an example. In practice, there may be additional devices, fewer devices, different devices, or differently arranged devices than those shown in Figs. 1A-1D. Furthermore, two or more devices shown in Figs. 1A-1D may be implemented within a single device, or a single device shown in Figs. 1A-1D may be implemented as multiple, distributed devices. Additionally, or alternatively, a set of devices (e.g., one or more devices) shown in Figs. 1A-1D may perform one or more functions described as being performed by another set of devices shown in Figs. 1A-1D.

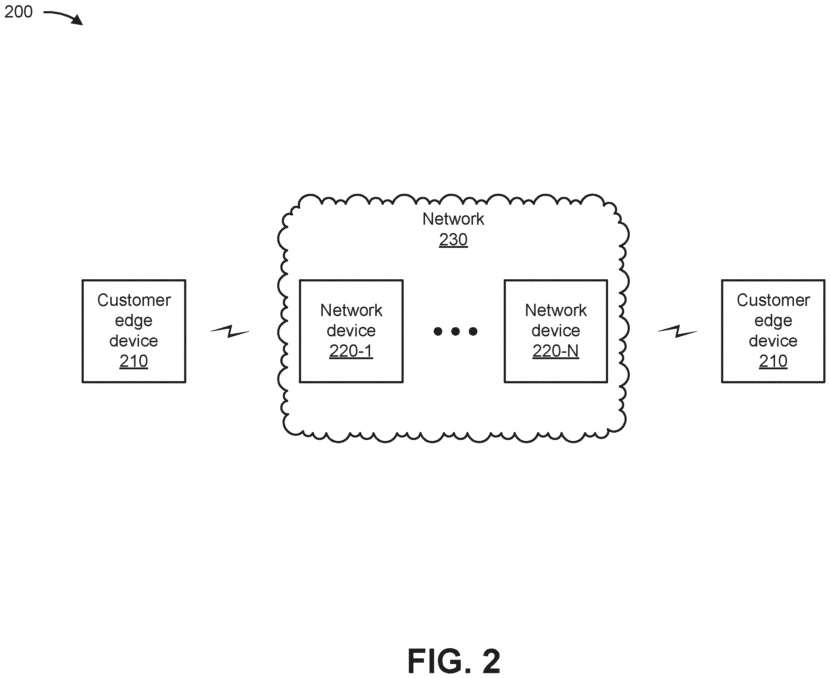

Fig. 2 is a diagram of an example environment 200 in which systems and/or methods described herein may be implemented. As shown in Fig. 2, environment 200 may include an customer edge devices 210, a group of network devices 220 (shown as network device 220-1 through network device 220-N), and a network 230. The network devices 220 may correspond to the root provider edge devices and the leaf provider edge devices depicted in Figs. 1A-1D. Devices of the environment 200 may interconnect via wired connections, wireless connections, or a combination of wired and wireless connections.

The customer edge device 210 includes one or more devices capable of receiving, generating, storing, processing, and/or providing information, such as information described herein. For example, the customer edge device 210 may include a mobile phone (e.g., a smart phone or a radiotelephone), a laptop computer, a tablet computer, a desktop computer, a handheld computer, a gaming device, a wearable communication device (e.g., a smart watch, a pair of smart glasses, a heart rate monitor, a fitness tracker, smart clothing, smart j ewelry, or a head mounted display), a network device, a server device, a group of server devices, or a similar type of device. In some implementations, the customer edge device 210 may receive network traffic from and/or may provide network traffic to other customer edge devices 210, via the network 230 (e.g., by routing packets using the network devices 220 as intermediaries).

The network device 220 includes one or more devices capable of receiving, processing, storing, routing, and/or providing traffic (e.g., a packet or other information or metadata) in a manner described herein. For example, the network device 220 may include a router, such as a label switching router (LSR), a label edge router (LER), an ingress router, an egress router, a provider router (e.g., a provider edge router or a provider core router), a virtual router, a route reflector, an area border router, or another type of router. Additionally, or alternatively, the network device 220 may include a gateway, a switch, a firewall, a hub, a bridge, a reverse proxy, a server (e.g., a proxy server, a cloud server, or a data center server), a load balancer, and/or a similar device. In some implementations, the network device 220 may be a physical device implemented within a housing, such as a chassis. In some implementations, the network device 220 may be a virtual device implemented by one or more computer devices of a cloud computing environment or a data center. In some implementations, a group of network devices 220 may be a group of data center nodes that are used to route traffic flow through the network 230.

The network 230 includes one or more wired and/or wireless networks. For example, the network 230 may include a packet switched network, a cellular network (e.g., a fifth generation (5G) network, a fourth generation (4G) network, such as a long-term evolution (LTE) network, a third generation (3G) network, a code division multiple access (CDMA) network, a public land mobile network (PLMN)), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of the environment 200 may perform one or more functions described as being performed by another set of devices of the environment 200.

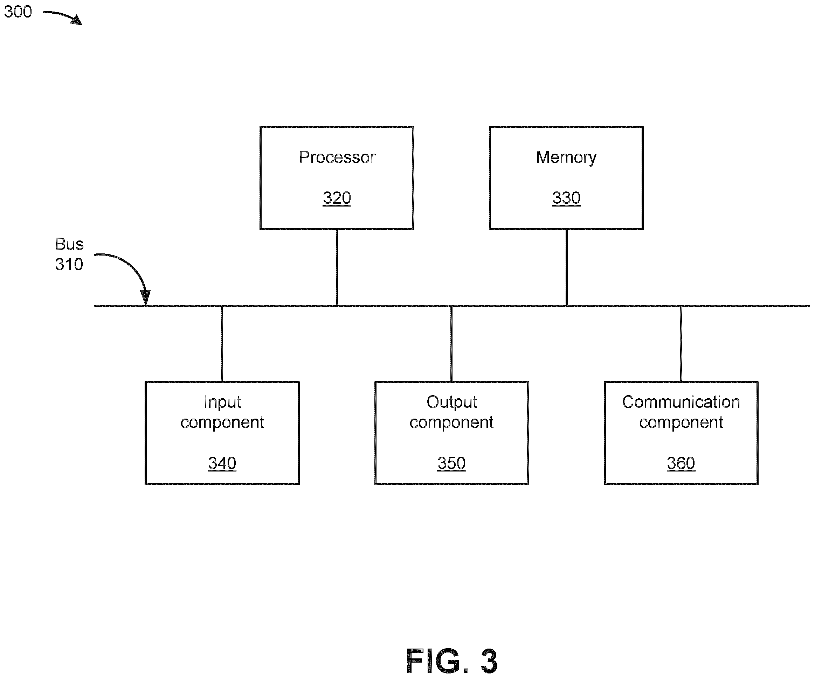

Fig. 3 is a diagram of example components of one or more devices of Fig. 2. The example components may be included in a device 300, which may correspond to the customer edge device 210 and/or the network device 220. In some implementations, the customer edge device 210 and/or the network device 220 may include one or more devices 300 and/or one or more components of the device 300. As shown in Fig. 3, the device 300 may include a bus 310, a processor 320, a memory 330, an input component 340, an output component 350, and a communication interface 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit (CPU), a graphics processing unit (GPU), an accelerated processing unit (APU), a microprocessor, a controller, a microcontroller, a digital signal processor (DSP), a field-programmable gate array (FPGA), an application-specific integrated circuit (ASIC), and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication interface 360 enables the device 300 to communicate with other devices via a wired connection and/or a wireless connection. For example, the communication interface 360 may include a receiver, a transmitter, a transceiver, a modem, a network interface card, and/or an antenna.

The device 300 may perform one or more operations or processes described herein. For example, a computer-readable storage medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

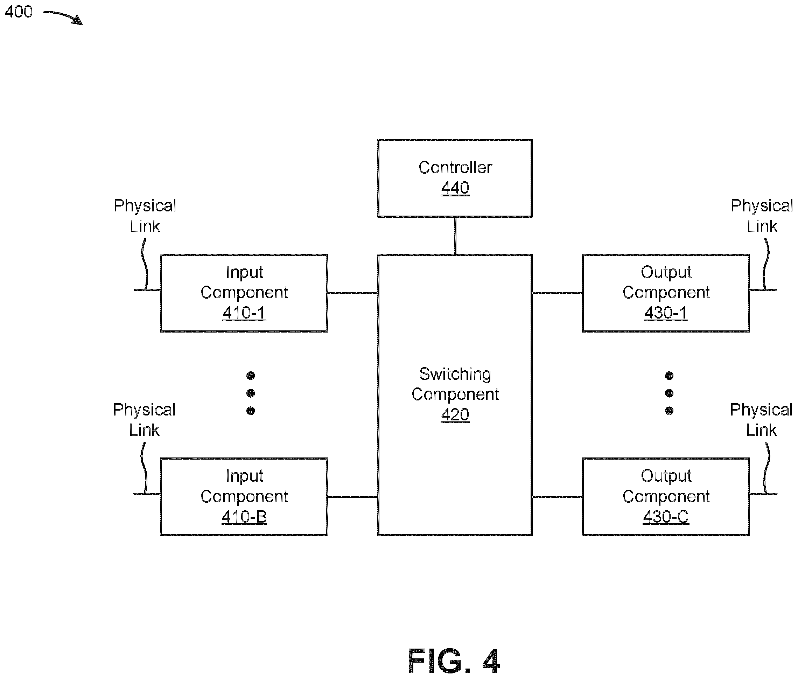

Fig. 4 is a diagram of example components of one or more devices of Fig. 2. The example components may be included in a device 400. The device 400 may correspond to the network device 220. In some implementations, the network device 220 may include one or more devices 400 and/or one or more components of the device 400. As shown in Fig. 4, the device 400 may include one or more input components 410-1 through 410-B (B ≥ 1) (hereinafter referred to collectively as input components 410, and individually as input component 410), a switching component 420, one or more output components 430-1 through 430-C (C ≥ 1) (hereinafter referred to collectively as output components 430, and individually as output component 430), and a controller 440.

The input component 410 may be one or more points of attachment for physical links and may be one or more points of entry for incoming traffic, such as packets. The input component 410 may process incoming traffic, such as by performing data link layer encapsulation or decapsulation. In some implementations, the input component 410 may transmit and/or receive packets. In some implementations, the input component 410 may include an input line card that includes one or more packet processing components (e.g., in the form of integrated circuits), such as one or more interface cards (IFCs), packet forwarding components, line card controller components, input ports, processors, memories, and/or input queues. In some implementations, the device 400 may include one or more input components 410.

The switching component 420 may interconnect the input components 410 with the output components 430. In some implementations, the switching component 420 may be implemented via one or more crossbars, via busses, and/or with shared memories. The shared memories may act as temporary buffers to store packets from the input components 410 before the packets are eventually scheduled for delivery to the output components 430. In some implementations, the switching component 420 may enable the input components 410, the output components 430, and/or the controller 440 to communicate with one another.

The output component 430 may store packets and may schedule packets for transmission on output physical links. The output component 430 may support data link layer encapsulation or decapsulation, and/or a variety of higher-level protocols. In some implementations, the output component 430 may transmit packets and/or receive packets. In some implementations, the output component 430 may include an output line card that includes one or more packet processing components (e.g., in the form of integrated circuits), such as one or more IFCs, packet forwarding components, line card controller components, output ports, processors, memories, and/or output queues. In some implementations, the device 400 may include one or more output components 430. In some implementations, the input component 410 and the output component 430 may be implemented by the same set of components (e.g., and input/output component may be a combination of the input component 410 and the output component 430).

The controller 440 includes a processor in the form of, for example, a CPU, a GPU, an APU, a microprocessor, a microcontroller, a DSP, an FPGA, an ASIC, and/or another type of processor. The processor is implemented in hardware, firmware, or a combination of hardware and software. In some implementations, the controller 440 may include one or more processors that can be programmed to perform a function.

In some implementations, the controller 440 may include a RAM, a ROM, and/or another type of dynamic or static storage device (e.g., a flash memory, a magnetic memory, an optical memory, etc.) that stores information and/or instructions for use by the controller 440.

In some implementations, the controller 440 may communicate with other devices, networks, and/or systems connected to the device 400 to exchange information regarding network topology. The controller 440 may create routing tables based on the network topology information, may create forwarding tables based on the routing tables, and may forward the forwarding tables to the input components 410 and/or output components 430. The input components 410 and/or the output components 430 may use the forwarding tables to perform route lookups for incoming and/or outgoing packets.

The controller 440 may perform one or more processes described herein. The controller 440 may perform these processes in response to executing software instructions provided from a computer-readable medium. A computer readable medium may be provided as the computer-readable storage medium and/or a computer readable transmission medium. A computer readable storage medium, which may be referred to as non-transitory in nature may include a memory device. A memory device includes memory space within a single physical storage device or memory space spread across multiple physical storage devices. Examples of a memory device include a CD, a DVD, a storage device, a diskette, a tape, flash memory, physical memory, or any other computer-readable storage medium. As mentioned, a computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

Software instructions may be read into a memory and/or storage component associated with the controller 440 from another computer-readable medium or from another device via a communication interface. When executed, software instructions stored in a memory and/or storage component associated with the controller 440 may cause the controller 440 to perform one or more processes described herein. Additionally, or alternatively, hardwired circuitry may be used in place of or in combination with software instructions to perform one or more processes described herein. Thus, implementations described herein are not limited to any specific combination of hardware circuitry and software.

The number and arrangement of components shown in Fig. 4 are provided as an example. In practice, the device 400 may include additional components, fewer components, different components, or differently arranged components than those shown in Fig. 4. Additionally, or alternatively, a set of components (e.g., one or more components) of the device 400 may perform one or more functions described as being performed by another set of components of the device 400.

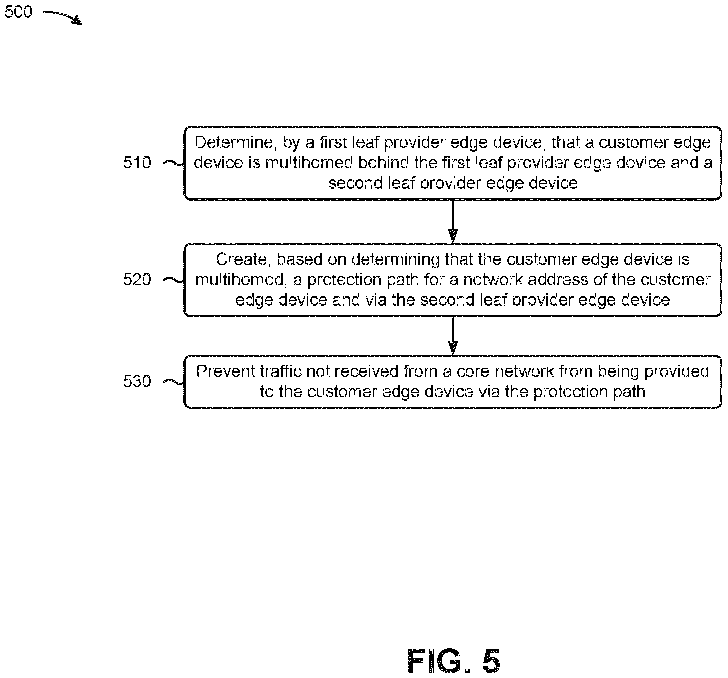

Fig. 5 is a flowchart of an example process 500 for providing Ethernet-tree integrated routing and bridging with egress link protection. In some implementations, one or more process blocks of Fig. 5 may be performed by a network device (e.g., the network device 220). In some implementations, one or more process blocks of Fig. 5 may be performed by another device or a group of devices separate from or including the network device, such as a customer edge device (e.g., the customer edge device 210) and/or another network device (e.g., the network device 220). Additionally, or alternatively, one or more process blocks of Fig. 5 may be performed by one or more components of the device 300, such as the processor 320, the memory 330, the input component 340, the output component 350, and/or the communication interface 360. Additionally, or alternatively, one or more process blocks of Fig. 5 may be performed by one or more components of the device 400, such as the input component 410, the switching component 420, the output component 430, and/or the controller 440.

In some implementations, the process 500 may to customer devices having either IPv4 or IPv6 or both IPv4 and IPv6 host addresses. For integrated routing and bridging (IRB) egress protection link protection support, the process 500 may utilize asymmetric IRB routing for inter-subnet traffic in the network. The process 500 may apply under the assumption that all the customer edge devices attached to an EVPN network device have either a root property or a leaf property, instead of mixed leaf or root properties. Asymmetric IRB routing may apply to an ingress network device. After Layer 3 routing at the ingress network device, if the destination IP host address does not point to a discard (e.g., next hop), traffic may be forwarded to the egress network device through Layer 2 EVPN. Furthermore, asymmetric IRB routing may be applied on the ingress network device.

As shown in Fig. 5, process 500 may include determining that a customer edge device is multihomed behind the first leaf provider edge device and a second leaf provider edge device (block 510). For example, the first leaf provider edge device may determine that a customer edge device is multihomed behind the first leaf provider edge device and a second leaf provider edge device, as described above. In some implementations, determining that the customer edge device is multihomed behind the first leaf provider edge device and the second leaf provider edge device includes synchronizing link state and routing information with the second leaf provider edge device, and determining that the customer edge device is multihomed based on synchronizing the link state and the routing information with the second leaf provider edge device.

As further shown in Fig. 5, process 500 may include creating, based on determining that the customer edge device is multihomed, a protection path for a network address of the customer edge device and via the second leaf provider edge device (block 520). For example, the first leaf provider edge device may create, based on determining that the customer edge device is multihomed, a protection path for a network address of the customer edge device and via the second leaf provider edge device, as described above. In some implementations, creating the protection path for the network address of the customer edge device includes programming the network address to point to an access interface, between the first leaf provider edge device and the customer edge device, with a first weight in a forwarding plane, and programming the network address to point to the protection path with a second weight in the forwarding plane, wherein the second weight is greater than the first weight.

As further shown in Fig. 5, process 500 may include preventing traffic not received from a core network from being provided to the customer edge device via the protection path (block 530). For example, the first leaf provider edge device may prevent traffic not received from a core network from being provided to the customer edge device via the protection path, as described above.

In some implementations, process 500 includes determining that an access interface between the first leaf provider edge device and the customer edge device is inoperable, receiving traffic from a core network, and providing the traffic to the customer edge device, via the protection path and the second leaf provider edge device, based on determining that the access interface between the first leaf provider edge device and the customer edge device is inoperable.

In some implementations, process 500 includes detecting an egress link failure to the customer edge device, and permitting traffic, received from the core network, to be provided to the customer edge device via the protection path based on detecting the egress link failure to the customer edge device. In some implementations, process 500 includes enabling Ethernet-tree integrated routing and bridging to prevent leaf-to-leaf inter-subnet traffic. In some implementations, process 500 includes enabling Ethernet-tree integrated routing and bridging with egress link protection.

In some implementations, process 500 includes installing the network address of the customer edge device in a forwarding plane for a bridge domain to which the network address belongs, and installing a host Internet protocol (IP) address associated with the network address in the forwarding plane based on a root property or a leaf property. In some implementations, process 500 includes maintaining a next-hop associated with the IP host address when the network address is associated with the root property. In some implementations, process 500 includes causing a next-hop, associated with the IP host address, to be associated with a discard next-hop when the network address is associated with the leaf property. In some implementations, process 500 includes preventing traffic not received from a core network from being provided to the customer edge device based on installing the network address and the host IP address in the forwarding plane.

In some implementations, process 500 includes determining that an access interface between the first leaf provider edge device and another customer edge device is inoperable, receiving traffic from a core network, and providing the traffic to the other customer edge device, via the protection path and the second leaf provider edge device, based on determining that the access interface between the first leaf provider edge device and the other customer edge device is inoperable. In some implementations, process 500 includes performing egress link protection for the multihomed customer edge device for asymmetric traffic.

Although Fig. 5 shows example blocks of process 500, in some implementations, process 500 may include additional blocks, fewer blocks, different blocks, or differently arranged blocks than those depicted in Fig. 5. Additionally, or alternatively, two or more of the blocks of process 500 may be performed in parallel.

Therefore, from one perspective, there have been described approaches by which a first leaf provider edge device may determine that a customer edge device is multihomed behind the first leaf provider edge device and a second leaf provider edge device. The first leaf provider edge device may create, based on determining that the customer edge device is multihomed, a protection path for a network address of the customer edge device and via the second leaf provider edge device. The first leaf provider edge device may prevent traffic not received from a core network from being provided to the customer edge device via the protection path.

Further examples of feature combinations taught by the present disclosure are set out in the following numbered clauses.

Clause 1. A method, comprising: determining, by a first leaf provider edge device, that a customer edge device is multihomed behind the first leaf provider edge device and a second leaf provider edge device; creating, by the first leaf provider edge device and based on determining that the customer edge device is multihomed, a protection path for a network address of the customer edge device and via the second leaf provider edge device; and preventing, by the first leaf provider edge device, traffic not received from a core network from being provided to the customer edge device via the protection path.

Clause 2. The method of clause 1, further comprising: determining that an access interface between the first leaf provider edge device and the customer edge device is inoperable; receiving traffic from a core network; and providing the traffic to the customer edge device, via the protection path and the second leaf provider edge device, based on determining that the access interface between the first leaf provider edge device and the customer edge device is inoperable.

Clause 3. The method of clause 1 or 2, wherein determining that the customer edge device is multihomed behind the first leaf provider edge device and the second leaf provider edge device comprises: synchronizing link state and routing information with the second leaf provider edge device; and determining that the customer edge device is multihomed based on synchronizing the link state and the routing information with the second leaf provider edge device.

Clause 4. The method of clause 1, 2 or 3, wherein creating the protection path for the network address of the customer edge device comprises: programming the network address to point to an access interface, between the first leaf provider edge device and the customer edge device, with a first weight in a forwarding plane; and programming the network address to point to the protection path with a second weight in the forwarding plane, wherein the second weight is greater than the first weight.

Clause 5. The method of any preceding clause, further comprising: detecting an egress link failure to the customer edge device; and permitting traffic, received from the core network, to be provided to the customer edge device via the protection path based on detecting the egress link failure to the customer edge device.

Clause 6. The method of any preceding clause, further comprising: enabling Ethernet-tree integrated routing and bridging to prevent leaf-to-leaf inter-subnet traffic.

Clause 7. The method of any preceding clause, further comprising: enabling Ethernet-tree integrated routing and bridging with egress link protection.

Clause 8. A first leaf provider edge device, comprising: one or more memories; and one or more processors to: determine that a customer edge device is multihomed behind the first leaf provider edge device and a second leaf provider edge device; create, based on determining that the customer edge device is multihomed, a protection path for a network address of the customer edge device and via the second leaf provider edge device; prevent traffic not received from a core network from being provided to the customer edge device via the protection path; and enable Ethernet-tree integrated routing and bridging to prevent leaf-to-leaf inter-subnet traffic.

Clause 9. The first leaf provider edge device of clause 8, wherein the one or more processors are further to: install the network address of the customer edge device in a forwarding plane for a bridge domain to which the network address belongs; and install a host Internet protocol (IP) address associated with the network address in the forwarding plane based on a root property or a leaf property.

Clause 10. The first leaf provider edge device of clause 9, wherein the one or more processors are further to: maintain a next-hop associated with the IP host address when the network address is associated with the root property.

Clause 11. The first leaf provider edge device of clause 9 or 10, wherein the one or more processors are further to: cause a next-hop, associated with the IP host address, to be associated with a discard next-hop when the network address bound to the IP host address is associated with the leaf property.

Clause 12. The first leaf provider edge device of clause 9, 10 or 11, wherein the one or more processors are further to: prevent traffic not received from a core network from being provided to the customer edge device based on installing the host IP address in the forwarding plane.

Clause 13. The first leaf provider edge device of any of clauses 8 to 12, wherein the one or more processors are further to: determine that an access interface between the first leaf provider edge device and another customer edge device is inoperable; receive traffic from a core network; and provide the traffic to the other customer edge device, via the protection path and the second leaf provider edge device, based on determining that the access interface between the first leaf provider edge device and the other customer edge device is inoperable.

Clause 14. The first leaf provider edge device of any of clauses 8 to 13, wherein the one or more processors are further to: perform egress link protection for the multihomed customer edge device for asymmetric traffic.

Clause 15. A computer-readable medium comprising a set of instructions, the set of instructions comprising: one or more instructions that, when executed by one or more processors of a first leaf provider edge device, cause the first leaf provider edge device to: determine that a customer edge device is multihomed behind the first leaf provider edge device and a second leaf provider edge device; create, based on determining that the customer edge device is multihomed, a protection path for a network address of the customer edge device and via the second leaf provider edge device; prevent traffic not received from a core network from being provided to the customer edge device via the protection path; and enable Ethernet-tree integrated routing and bridging with egress link protection.

Clause 16. The computer-readable medium of clause 15, wherein the one or more instructions further cause the first leaf provider edge device to: determine that an access interface between the first leaf provider edge device and the customer edge device is inoperable; receive traffic from a core network; and provide the traffic to the customer edge device, via the protection path and the second leaf provider edge device, based on determining that the access interface between the first leaf provider edge device and the customer edge device is inoperable.

Clause 17. The computer-readable medium of clause 15 or 16, wherein the one or more instructions, that cause the first leaf provider edge device to determine that the customer edge device is multihomed behind the first leaf provider edge device and the second leaf provider edge device, cause the first leaf provider edge device to: synchronize link state and routing information with the second leaf provider edge device; and determine that the customer edge device is multihomed based on synchronizing the link state and the routing information with the second leaf provider edge device.

Clause 18. The computer-readable medium of clause 15, 16 or 17, wherein the one or more instructions, that cause the first leaf provider edge device to create the protection path for the network address of the customer edge device, cause the first leaf provider edge device to: program the network address to point to an access interface, between the first leaf provider edge device and the customer edge device, with a first weight in a forwarding plane; and program the network address to point to the protection path with a second weight in the forwarding plane, wherein the second weight is greater than the first weight.

Clause 19. The computer-readable medium of any of clauses 15 to 18, wherein the one or more instructions further cause the first leaf provider edge device to: detect an egress link failure to the customer edge device; and permit traffic, received from the core network, to be provided to the customer edge device via the protection path based on detecting the egress link failure to the customer edge device.

Clause 20. The computer-readable medium of any of clauses 15 to 19, wherein the Ethernet-tree integrated routing and bridging prevents leaf- to-leaf inter-subnet traffic.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

In the preceding specification, various example embodiments have been described with reference to the accompanying drawings. It will, however, be evident that various modifications and changes may be made thereto, and additional embodiments may be implemented, without departing from the broader scope as set forth in the claims that follow. The specification and drawings are accordingly to be regarded in an illustrative rather than restrictive sense.

## Claims

1. A method, comprising:
determining, by a first leaf provider edge device, that a customer edge device is multihomed behind the first leaf provider edge device and a second leaf provider edge device;
creating, by the first leaf provider edge device and based on determining that the customer edge device is multihomed, a protection path for a network address of the customer edge device and via the second leaf provider edge device; and
preventing, by the first leaf provider edge device, traffic not received from a core network from being provided to the customer edge device via the protection path.

2. The method of claim 1, further comprising:
determining that an access interface between the first leaf provider edge device and the customer edge device is inoperable;
receiving traffic from a core network; and
providing the traffic to the customer edge device, via the protection path and the second leaf provider edge device, based on determining that the access interface between the first leaf provider edge device and the customer edge device is inoperable.

3. The method of claim 1 or 2, wherein determining that the customer edge device is multihomed behind the first leaf provider edge device and the second leaf provider edge device comprises:
synchronizing link state and routing information with the second leaf provider edge device; and
determining that the customer edge device is multihomed based on synchronizing the link state and the routing information with the second leaf provider edge device.

4. The method of claim 1, 2 or 3, wherein creating the protection path for the network address of the customer edge device comprises:
programming the network address to point to an access interface, between the first leaf provider edge device and the customer edge device, with a first weight in a forwarding plane; and
programming the network address to point to the protection path with a second weight in the forwarding plane,
wherein the second weight is greater than the first weight.

5. The method of any preceding claim, further comprising:
detecting an egress link failure to the customer edge device; and
permitting traffic, received from the core network, to be provided to the customer edge device via the protection path based on detecting the egress link failure to the customer edge device.

6. The method of any preceding claim, further comprising: enabling Ethernet-tree integrated routing and bridging to prevent leaf- to-leaf inter-subnet traffic.

7. The method of any preceding claim, further comprising: enabling Ethernet-tree integrated routing and bridging with egress link protection.

8. A first leaf provider edge device, comprising:
one or more memories; and
one or more processors configured to:
determine that a customer edge device is multihomed behind the first leaf provider edge device and a second leaf provider edge device;
create, based on determining that the customer edge device is multihomed, a protection path for a network address of the customer edge device and via the second leaf provider edge device;
prevent traffic not received from a core network from being provided to the customer edge device via the protection path; and
enable Ethernet-tree integrated routing and bridging to prevent leaf- to-leaf inter-subnet traffic.

9. The first leaf provider edge device of claim 8, wherein the one or more processors are further configured to:
install the network address of the customer edge device in a forwarding plane for a bridge domain to which the network address belongs; and
install a host Internet protocol (IP) address associated with the network address in the forwarding plane based on a root property or a leaf property.

10. The first leaf provider edge device of claim 9, wherein the one or more processors are further configured to:
maintain a next-hop associated with the IP host address when the network address is associated with the root property.

11. The first leaf provider edge device of claim 9 or 10, wherein the one or more processors are further configured to:
cause a next-hop, associated with the IP host address, to be associated with a discard next-hop when the network address bound to the IP host address is associated with the leaf property.

12. The first leaf provider edge device of claim 9, 10 or 11, wherein the one or more processors are further configured to:
prevent traffic not received from a core network from being provided to the customer edge device based on installing the host IP address in the forwarding plane.

13. The first leaf provider edge device of any of claims 8 to 12, wherein the one or more processors are further configured to:
determine that an access interface between the first leaf provider edge device and another customer edge device is inoperable;
receive traffic from a core network; and
provide the traffic to the other customer edge device, via the protection path and the second leaf provider edge device, based on determining that the access interface between the first leaf provider edge device and the other customer edge device is inoperable.

14. The first leaf provider edge device of any of claims 8 to 13, wherein the one or more processors are further configured to:
perform egress link protection for the multihomed customer edge device for asymmetric traffic.

15. A computer-readable medium comprising one or more instructions that, when executed by one or more processors of a first leaf provider edge device, cause the first leaf provider edge device to carry out the method of any of claims 1 to 7.
